# FASCICULE DE BREVET EUROPEEN

(11) **EP 3 407 087 B1**
(45) Date de publication et mention de la délivrance du brevet: **19.02.2025**
(21) Numéro de dépôt: 18173158.9
(22) Date de dépôt: 18.05.2018
(51) Int. Cl.: G01S 17/88, G01S 7/484, G01S 7/48

(54) **PROCÉDÉ DE GÉNÉRATION DE PEIGNES FRÉQUENTIELS, MODULE DE GÉNÉRATION ASSOCIÉ, PROCÉDÉ DE SPECTROSCOPIE À DISTANCE ET DISPOSITIF DE SPECTROSCOPIE ASSOCIÉ**
ERZEUGUNGSVERFAHREN VON FREQUENZKÄMMEN, ENTSPRECHENDES ERZEUGUNGSMODUL, TELESPEKTROSKOPIEVERFAHREN UND ENTSPRECHENDE SPEKTROSKOPIEVORRICHTUNG
METHOD FOR GENERATING FREQUENCY COMBS, ASSOCIATED GENERATION MODULE, REMOTE SPECTROSCOPY METHOD AND ASSOCIATED SPECTROSCOPY DEVICE

(30) Priorité: 23.05.2017 FR 1754571
(43) Date de publication de la demande: 28.11.2018
(73) Titulaire: Centre National d'Etudes Spatiales, 75001 Paris (FR); Office National d'Etudes et de Recherches Aérospatiales, 91120 Palaiseau (FR)
(72) Inventeur: HÉBERT, Philippe, 31500 Toulouse (FR); LEMAÎTRE, François, 31650 St-Orens-de-Gameville (FR); ORLIK, Xavier, 31320 Pechabou (FR); DARTIGALONGUE, Thibault, 31500 Toulouse (FR)
(74) Mandataire: Germain Maureau

(56) Documents cités:
- EP-A1- 2 908 168
- FR-A1- 3 027 116
- FR-A1- 3 039 331
- YOKOYAMA S ET AL: "Terahertz Frequency Comb for High-accuracy, High-resolution Terahertz Spectroscopy", CLEO '07. 2007 CONFERENCE ON LASERS AND ELECTRO-OPTICS 5-11 MAY 2007 BALTIMORE, MD, USA, OSA, PISCATAWAY, NJ, USA, 6 May 2007 (2007-05-06), pages 1 - 2, XP031230960, ISBN: 978-1-55752-834-6

## Description

La présente invention concerne un procédé de génération de peignes fréquentiels et un module de génération associé.

La présente invention concerne également un procédé de spectroscopie à distance et un dispositif de spectroscopie associé.

Différents procédés de spectroscopie à distance sont déjà connus dans l'état de la technique. Un exemple d'un tel procédé de spectroscopie est décrit notamment dans la demande FR 3039331.

Ce procédé de spectroscopie est dit de type « LIDAR » ce qui signifie qu'il est mis en oeuvre par un outil de télédétection et de mesure optique connu sous le terme « LIDAR ». Le terme « LIDAR » provient de l'expression anglaise « light détection and ranging » (ou « détection et mesure par lumière » en français).

En particulier, ce procédé permet d'étudier la composition d'une matière ciblée située à distance du LIDAR en émettant vers cette matière une onde lumineuse d'une fréquence déterminée et puis, en recevant une onde lumineuse réfléchie par cette matière.

Ainsi, en comparant cette onde lumineuse réfléchie avec l'onde initiale ou avec un signal de référence, il est par exemple possible de déterminer le coefficient d'absorption par la matière ce qui permet généralement de déterminer la composition précise de cette matière.

L'onde lumineuse est émise par le LIDAR sous la forme d'un peigne fréquentiel composé généralement d'une pluralité de raies lumineuses. Ces raies sont générées à partir d'un signal laser par un ou plusieurs modulateurs avec une fréquence prédéterminée, en utilisant des méthodes de générations connues en soi. Cette fréquence est choisie notamment en fonction de la finesse d'échantillonnage souhaitée.

Toutes les raies du peigne sont envoyées simultanément vers la matière ciblée, réfléchies par la suite par cette matière et reçues par le LIDAR. Par mélange avec le signal de référence, l'onde lumineuse reçue permet d'obtenir un interférogramme de la matière ciblée. Sa transformée de Fourier fournit alors un spectre de la matière ciblée, c'est-à-dire une composition précise de cette matière.

La qualité de l'échantillonnage dépend donc considérablement de la qualité des peignes émis vers la matière ciblée.

En particulier, pour assurer une bonne qualité de l'échantillonnage, les raies de ces peignes doivent être parfaitement contrôlées et stables.

De plus, afin d'obtenir une décomposition plus complète de la matière ciblée, ces peignes doivent contenir un nombre important de raies ce qui permet donc de couvrir un spectre fréquentiel important de la matière ciblée.

Toutefois, en appliquant les méthodes de génération de peignes par modulation de phase existantes, il est souvent difficile d'augmenter le nombre des raies dans un même peigne au-delà de neuf tout en assurant la stabilité de ce peigne.

La présente invention a pour but de proposer un procédé de génération permettant d'obtenir un peigne particulièrement stable dont le nombre des raies est supérieur à neuf et égal de préférence à treize.

À cet effet, l'invention a pour objet un procédé de génération de peignes fréquentiels composés d'un nombre prédéterminé de raies, le procédé comportant des étapes de :
A) génération d'une raie principale par une source laser ;
B) génération d'une première pluralité de raies en modulant la raie principale par un premier signal radiofréquence ;
C) génération d'une deuxième pluralité de raies en modulant chaque raie de la première pluralité de raies par un deuxième signal radiofréquence autre que le premier signal radiofréquence ;
D) génération d'une troisième pluralité de raies en modulant chaque raie de la deuxième pluralité de raies par un troisième signal radiofréquence autre que les premier et deuxième signaux radiofréquences ; et
E) formation d'un peigne à partir des raies de la troisième pluralité de raies, chacun des premier, deuxième et troisième signaux radiofréquence étant à une valeur fréquentielle respective, et les valeur fréquentielles respectives des premier, deuxième et troisième signaux radiofréquence comprenant une première valeur fréquentielle, une deuxième valeur fréquentielle étant au double de la première valeur fréquentielle et une troisième valeur fréquentielle égale au triple de la première valeur fréquentielle.

Suivant d'autres aspects avantageux de l'invention, le procédé de génération comprend une ou plusieurs des caractéristiques suivantes, prise(s) isolément ou suivant toutes les combinaisons techniquement possibles :
- la modulation par le premier signal radiofréquence est effectuée avec une amplitude de modulation sensiblement égale à 1,6418 radians et un déphasage relatif sensiblement égal à 21,8° ;
- la modulation par le deuxième signal radiofréquence est effectuée avec une amplitude de modulation sensiblement égale à 1,3549 radians et un déphasage relatif sensiblement égal à 43,6° ;
- la modulation par le troisième signal radiofréquence est effectuée avec une amplitude de modulation sensiblement égale à 2,2829 radians et un déphasage relatif sensiblement égal à 245,4° ;

L'invention a également pour objet un procédé de génération de peignes fréquentiels composés d'un nombre prédéterminé de raies, le procédé comprenant les étapes suivantes :
A') génération d'une raie principale par une source laser ;
B') génération d'un signal complexe correspondant à la somme de trois signaux radiofréquence distincts ;
C') génération d'une pluralité principale de raies en modulant la raie principale par le signal complexe ;
D') formation d'un peigne à partir des raies de la pluralité principale de raies, chacun des signaux radiofréquence étant à une valeur fréquentielle respective, et les valeurs fréquentielles respectives des signaux radiofréquence comprenant une première valeur fréquentielle, une deuxième valeur fréquentielle égale au double de la première valeur fréquentielle et une troisième valeur fréquentielle égale au triple de la première valeur fréquentielle ;

Le procédé peut également comporter une ou plusieurs des caractéristiques suivantes :
- le peigne est composé de treize raies espacées régulièrement entre elles de la première valeur fréquentielle et sensiblement égales entre elles en puissance ;
- le procédé comporte en outre une étape de modulation des raies du peigne à une valeur fréquentielle additionnelle supérieure à la troisième valeur fréquentielle ; et
- la valeur fréquentielle additionnelle est comprise entre 20 et 40 GHz.

L'invention a également pour objet un module de génération de peignes fréquentiels composés d'un nombre prédéterminé de raies, comportant des moyens configures pour mettre en oeuvre le procédé de génération tel que défini ci-dessus.

L'invention a également pour objet un procédé de spectroscopie à distance de type LIDAR d'une matière ciblée comprenant les étapes suivantes :
- génération d'un signal d'émission comportant au moins un peigne généré comme décrit précédemment ;
- émission du signal d'émission vers la matière ciblée ;
- réception d'un signal de réponse correspondant au signal d'émission réfléchi par la matière ciblée ; et
- analyse du signal de réponse.

Suivant d'autres aspects avantageux de l'invention, le procédé de spectroscopie à distance comprend la caractéristique suivante :
- la première valeur fréquentielle est choisie en fonction de caractéristiques physiques de la matière ciblée.

L'invention a également pour objet un dispositif de spectroscopie à distance de type LIDAR mettant en oeuvre le procédé de spectroscopie tel que défini ci-dessus.

Ces caractéristiques et avantages de l'invention apparaîtront à la lecture de la description qui va suivre, donnée uniquement à titre d'exemple non limitatif, et faite en référence aux dessins annexés sur lesquels :
- la figure 1 est une vue schématique d'un dispositif de spectroscopie à distance selon l'invention, le dispositif comportant notamment un module de génération de peignes fréquentiels ;
- la figure 2 est une vue schématique du module de génération de la figure 1, implémenté selon un premier mode de réalisation ;
- la figure 3 est un organigramme d'un procédé de spectroscopie à distance selon l'invention, le procédé de spectroscopie à distance étant mis en oeuvre par le dispositif de spectroscopie à distance de la figure 1 et comportant notamment un procédé de génération de peignes fréquentiels ;
- la figure 4 est un organigramme du procédé de génération de peignes fréquentiels de la figure 3, implémenté selon un premier mode de réalisation ;
- la figure 5 est une vue schématique illustrant un peigne obtenu suite à la mise en oeuvre du procédé de génération de peignes fréquentiels de la figure 3 ;
- la figure 6 est une vue schématique du module de génération de la figure 1, implémenté selon un deuxième mode de réalisation ; et
- la figure 7 est un organigramme du procédé de génération de peignes fréquentiels de la figure 3, implémenté selon un deuxième mode de réalisation.

Dans la suite de la description, l'expression « sensiblement égal à » s'entend comme une relation d'égalité à plus ou moins 10 %.

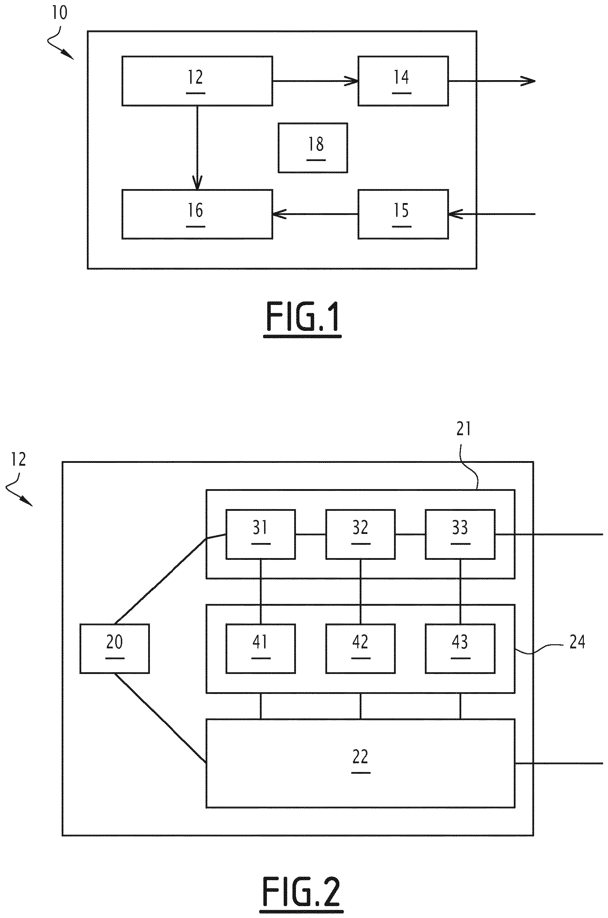

Le dispositif de spectroscopie 10 de la figure 1 est par exemple embarqué dans un satellite situé sur une orbite terrestre et effectuant des observations de la Terre, ou d'une autre planète, et notamment d'une couche d'atmosphère d'épaisseur égale par exemple à 15 km.

Le dispositif de spectroscopie 10 permet d'étudier une matière ciblée dans cette couche d'atmosphère. La matière ciblée est par exemple un gaz composé de plusieurs gaz élémentaires comme par exemple CO₂, H₂O ou CH₄.

Chaque gaz élémentaire est apte à absorber une onde lumineuse d'une fréquence déterminée avec un coefficient d'absorption connu a priori.

Ainsi, le dispositif de spectroscopie 10 permet par exemple de déterminer les masses volumiques des gaz élémentaires contenus dans le gaz ciblé en émettant un signal lumineux vers le gaz ciblé et en analysant un signal réfléchi par ce gaz, ou absorbé par lui et réfléchi par une surface en fond.

Selon une variante de réalisation, le dispositif de spectroscopie 10 est embarqué dans un autre véhicule spatial ou terrestre, ou encore un aéronef.

Selon encore une autre variante de réalisation, le dispositif de spectroscopie 10 est disposé de manière fixe par exemple sur la surface terrestre.

Dans au moins certaines des variantes de réalisation précitées, le dispositif de spectroscopie 10 permet d'étudier en outre une matière ciblée disposée dans tout milieu autre que l'atmosphère comme par exemple le milieu sous-marin ou sous-terrain.

En référence à la figure 1, le dispositif de spectroscopie 10 comporte un module de génération 12 de peignes fréquentiels, un module d'émission 14, un module de réception 15, un module de post-traitement 16 et un module de pilotage 18.

Le module de génération 12 est apte à former un signal d'émission et un signal de référence destinés respectivement au module d'émission 14 et au module de post-traitement 16. Chacun de ces signaux comporte au moins un peigne fréquentiel généré comme cela sera expliqué par la suite.

Le module d'émission 14 est un télescope d'émission connu en soi qui est apte à recevoir les signaux d'émission issus du module de génération 12 et à les émettre vers la matière ciblée.

Le module de réception 15 est un télescope de réception également connu en soi qui est apte à recevoir des signaux de réponse correspondant aux signaux d'émission émis par le module d'émission 14 et réfléchis parla matière ciblée ou une autre matière.

Selon une variante de réalisation, les télescopes des modules d'émission 14 et de réception 15 se présentent sous la forme d'un composant unique.

Le module de post-traitement 16 est apte à recevoir les signaux de référence générés par le module de génération 12 et les signaux de réponse reçus par le module de réception 15.

Le module de post-traitement 16 permet notamment de convertir les signaux de référence et de réponse en des signaux numériques dont l'analyse donne une composition précise de la matière ciblée. Cette analyse est effectuée selon des méthodes d'analyse connues en soi.

Le module de pilotage 18 permet de piloter le fonctionnement de l'ensemble des modules du dispositif de spectroscopie 10.

Le module de pilotage 18 est par exemple raccordé à un calculateur central (non représenté) du satellite à partir duquel, il est commandé.

Le module de génération 12 selon un premier mode de réalisation sera désormais expliqué en référence à la figure 2.

Ainsi, comme cela est illustré sur cette figure 2, le module de génération 12 comporte une source laser 20, deux voies optiques 21, 22 raccordées à cette source laser 20 par des moyens de guidage optique et un dispositif électronique 24 de gestion de ces voies 21, 22.

La source laser 20 est apte à émettre un signal laser à une fréquence génératrice qui est sensiblement égale par exemple à 200 THz. Ce signal laser comprend notamment une raie laser, dite par la suite raie principale.

Les voies optiques 21, 22 sont aptes à recevoir le signal laser émis par la source laser 20 et à partir de ce signal, à former respectivement un signal d'émission et un signal de référence.

Les voies optiques 21, 22 sont analogues entre elles et comportent notamment sensiblement les mêmes composants.

À la différence de la voie optique 21, la voie optique 22 comporte en outre des moyens de différenciation du signal de référence du signal d'émission.

Ces moyens de différenciation sont configurés en fonction de la méthode de construction choisie pour déterminer la composition de la matière ciblée. Dans l'exemple de réalisation décrit, ces moyens comprennent notamment des moyens de retardement permettant de retarder l'émission du signal de référence par rapport au signal d'émission afin de synchroniser ce signal de référence avec le signal de réponse correspondant. Ces moyens sont connus en soi et ne seront pas détaillés.

Par la suite, seule la voie optique 21 sera décrite en détail.

Ainsi, comme cela est illustré sur la figure 2, la voie optique comprend trois modulateurs, à savoir un premier modulateur 31, un deuxième modulateur 32 et un troisième modulateur 33, raccordés en série à la source laser 20.

Chaque modulateur 31 à 33 présente par exemple un modulateur électrooptique connu en soi.

Ainsi, chaque modulateur 31 à 33 est apte à générer par modulation de phase une pluralité de raies à partir de chaque raie passant par la voie optique 21 en fonction d'un signal radiofréquence pilotant le fonctionnement de ce modulateur 31 à 33.

À cet effet, le dispositif électronique de gestion 24 comporte trois unités de gestion, à savoir une première unité de gestion 41 associée au premier modulateur 31, une deuxième unité de gestion 42 associée au deuxième modulateur 32 et une troisième unité de gestion 43 associée au troisième modulateur 33.

Chaque unité de gestion 41 à 43 permet de piloter le modulateur 31 à 33 qui lui est associé en générant un signal radiofréquence sinusoïdale avec une amplitude de modulation donnée, un déphasage relatif donné et une valeur fréquentielle donnée.

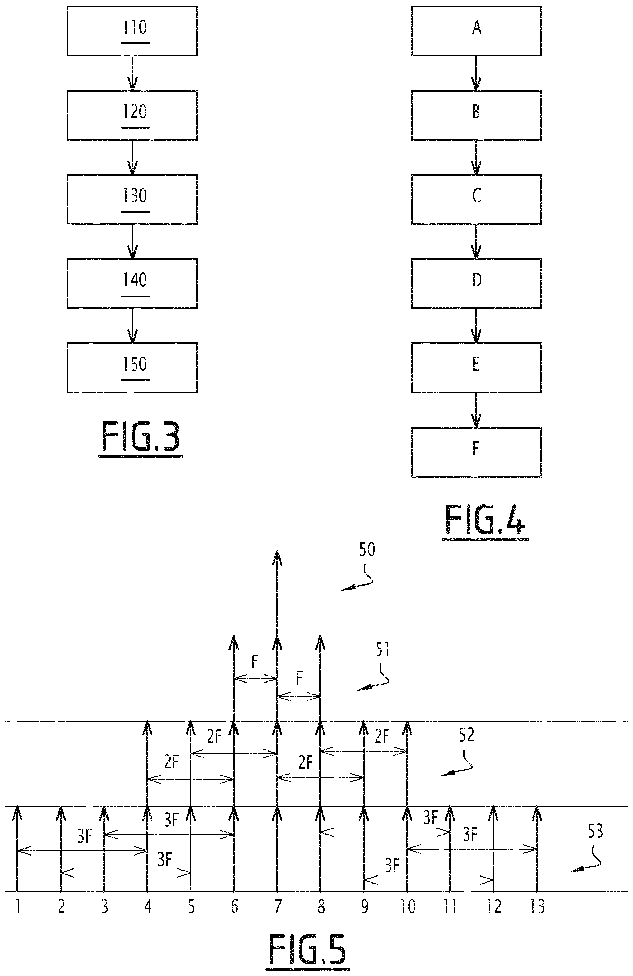

Le procédé de spectroscopie à distance mis en oeuvre par le dispositif de spectroscopie 10 sera désormais expliqué en référence à la figure 3 illustrant un organigramme de ses étapes.

Initialement, la matière ciblée est déterminée et les modules d'émission 14 et de réception 15 sont configurés pour respectivement émettre un signal d'émission vers cette matière et recevoir un signal de réponse réfléchi par cette matière.

Lors de l'étape 110, le module de pilotage 18 commande la génération d'un signal d'émission parle module génération 12.

Lors de l'étape 120 suivante, le module de génération 12 génère alors un signal d'émission destiné au module d'émission 14 et un signal de référence destiné au module de post-traitement 16.

Le signal d'émission comporte un peigne fréquentiel généré par la voie optique 21 et le signal de référence comporte un peigne fréquentiel généré par la voie optique 22 et éventuellement retardé par rapport au peigne compris dans le signal d'émission.

Chacun de ces peignes est généré selon un procédé de génération de peignes fréquentiels qui est mis en oeuvre par chacune des voies optiques 21, 22. La mise en oeuvre de ce procédé par la voie optique 21 sera expliquée plus en détail par la suite.

Lors de l'étape 130 suivante, le module d'émission 14 émet le signal d'émission généré par le module de génération 12 vers la matière ciblée.

Lors de l'étape 140 suivante, le module de réception 15 reçoit un signal de réponse correspondant au signal d'émission réfléchi par la matière ciblée.

Lors de l'étape 150 suivante, le module de post-traitement 16 analyse le signal de réponse reçu et détermine la composition de la matière ciblée en comparant notamment ce signal de réponse avec le signal de référence correspondant.

La mise en oeuvre du procédé de génération de peignes fréquentiels par la voie optique 21 sera désormais expliquée en référence à la figure 4 illustrant un organigramme des étapes de ce procédé et à la figure 5 illustrant la mise en oeuvre de ces étapes.

Lors de l'étape A) initiale, la source laser 20 génère un signal laser comportant alors une raie principale. Cette raie principale est référencée par la référence 50 sur la figure 5.

Lors de l'étape B) suivante, le premier modulateur 31 génère une première pluralité de raies 51 en modulant la raie principale par un premier signal radiofréquence à une premier valeur fréquentielle F.

Le premier signal radiofréquence est généré par la première unité de gestion 41 et est défini avec une amplitude de modulation sensiblement égale à 1,6418 radians et un déphasage relatif sensiblement égal à 21,8°.

La première valeur fréquentielle F est choisie en fonction de caractéristiques physiques de la matière ciblée, pour avoir par exemple un résultat d'analyse reproduisant le mieux ces caractéristiques.

La première valeur fréquentielle F est égale par exemple à 1 GHz.

La modulation mise en oeuvre lors de cette étape a pour conséquence la génération de trois raies égales entre elles en puissance et d'une multitude de raies de puissances beaucoup plus réduites qui seront négligées par la suite.

Ainsi, la première pluralité 51 est composée de trois raies dont l'une correspond à la raie principale et deux autres sont placées de part et d'autre de la raie principale et sont espacées de cette raie principale par la première valeur fréquentielle F.

Lors de l'étape C) suivante, le deuxième modulateur 31 génère une deuxième pluralité de raies 52 en modulant chaque raie de la première pluralité de raies 51 par un deuxième signal radiofréquence à une deuxième valeur fréquentielle 2F.

Le deuxième signal radiofréquence est généré par la deuxième unité de gestion 42 et est défini avec une amplitude de modulation sensiblement égale à 1,3549 radians et un déphasage relatif sensiblement égal à 43,6°.

La deuxième valeur fréquentielle 2F est égale au double de la première valeur fréquentielle F.

La modulation mise en oeuvre lors de cette étape a pour conséquence la génération de trois raies égales entre elles en puissance à partir de chaque raie de la première pluralité de raies 51, et d'une multitude de raies de puissances beaucoup plus réduites qui seront négligées par la suite.

Ainsi, compte tenu du recouvrement d'au moins certaines de raies comme cela est illustré sur la figure 5, la deuxième pluralité de raies 52 est composée de sept raies de puissances égales qui sont espacées l'une de l'autre de la première valeur fréquentielle F.

Lors de l'étape D) suivante, le troisième modulateur 33 génère une troisième pluralité de raies 53 en modulant chaque raie de la deuxième pluralité de raies 52 par un troisième signal radiofréquence à une troisième valeur fréquentielle 3F.

Le troisième signal radiofréquence est généré par la troisième unité de gestion 43 et est défini avec une amplitude de modulation sensiblement égale à 2,2829 radians et un déphasage relatif sensiblement égal à 245,4°.

La troisième valeur fréquentielle 3F est égale au triple de la première valeur fréquentielle F.

La modulation mise en oeuvre lors de cette étape a pour conséquence la génération de trois raies égales entre elles en puissance à partir de chaque raie de la deuxième pluralité de raies 52, et d'une multitude de raies de puissances beaucoup plus réduites qui seront négligées par la suite.

Ainsi, compte tenu du recouvrement d'au moins certaines de raies comme cela est illustré sur la figure 5, la troisième pluralité de raies 53 est composée de treize raies de puissances égales qui sont espacées l'une de l'autre de la première valeur fréquentielle F.

Finalement, lors de l'étape E) suivante, un peigne est formé à partir de la troisième pluralité de raies 53.

Ce peigne comporte ainsi treize raies espacées entre elles de la première valeur fréquentielle F.

Le procédé de génération de peignes fréquentiels par la voie optique 22 est mis en oeuvre de manière analogue en choisissant la première valeur fréquentielle F légèrement différente de celle choisie pour la voie optique 21. La différence entre les deux premières valeurs fréquentielles F correspondant aux voies optiques différentes 21, 22 est par exemple égale à 100 kHz.

Selon une variante de réalisation du dispositif de génération 12, les modulateurs 31 à 33 sont disposés en série selon un ordre différent de celui de la figure 3.

En effet, l'ordre de disposition de ces modulateurs 31 à 33 n'a pas d'influence à la forme du peigne final qui a toujours treize raies espacées de la première valeur fréquentielle F.

Ainsi, par exemple, lorsque le troisième modulateur 33 est mis à la place du premier modulateur 31 et le premier modulateur 31 est mis à la place du troisième modulateur, lors de l'étape B), c'est le troisième modulateur 33 qui génère la première pluralité de raies à partir de la raie principale. Ces raies de la première pluralité sont alors espacées de la troisième valeur fréquentielle 3F.

Puis, comme dans le cas précédent, lors de l'étape C), le deuxième modulateur 32 génère la deuxième pluralité de raies dans laquelle les raies sont espacées de la première valeur fréquentielle F ou de la deuxième valeur fréquentielle 2F.

Finalement, lors de l'étape D), le premier modulateur 31 génère la troisième pluralité de raies dans laquelle les raies sont espacées de la première valeur fréquentielle F.

Selon encore une variante de réalisation compatible avec l'une des variantes précédemment décrites, la voie optique 21 comporte en outre un modulateur additionnel placé en aval des modulateurs 31 à 33 décrits précédemment.

Un tel modulateur est piloté par une unité de pilotage additionnel pour moduler chaque raie passant par ce modulateur à une valeur fréquentielle additionnelle FA supérieure à la troisième valeur fréquentielle 3F.

La valeur fréquentielle additionnelle FA est comprise par exemple entre 20 et 40 GHz.

Dans ce cas, le procédé de génération décrit précédemment comporte en outre une étape F) mise en oeuvre après l'étape E) lors de laquelle toutes les raies du peigne formé lors de l'étape E) sont modulées parle modulateur additionnel.

Ceci a pour effet le triplement du peigne initial, c'est-à-dire, la génération de deux peignes de part et d'autre du peigne initial.

On conçoit alors que la présente invention présente un certain nombre d'avantages.

En effet, les peignes fréquentiels obtenus par le procédé de génération selon l'invention comportent chacun exactement treize raies qui sont espacées l'une de l'autre par une valeur fréquentielle donnée. Ces raies sont stables et parfaitement contrôlées.

Ceci permet alors d'améliorer la qualité du résultat d'analyse de la matière ciblée correspondante.

Cette qualité peut être améliorée en outre en rajoutant encore une modulation à une fréquence élevée pour tripler le peigne initial.

Ainsi, le signal d'émission formé avec les trois peignes permet de couvrir un domaine de longueur d'onde plus grand.

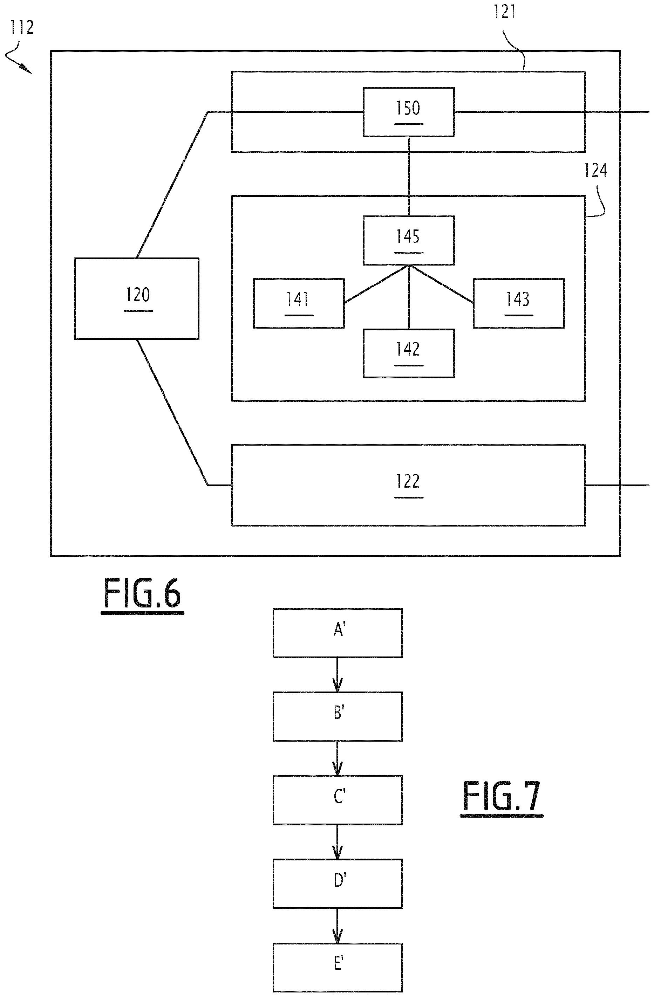

Un module de génération de peignes fréquentiels 112 selon un deuxième mode de réalisation de l'invention est illustré sur la figure 6.

Ainsi, en référence à cette figure 6, le module de génération 112, comme dans le cas précédent, comporte une source laser 120, deux voies optiques 121, 122 raccordées à cette source laser 120 par des moyens de guidage optiques et un dispositif électronique 124 de gestion de ces voies 121, 122.

La source laser 120 est analogue à la source laser 20 décrit précédemment.

Comme dans le cas précédent, le dispositif électronique de gestion 124 comporte trois unités de gestion, à savoir une première unité de gestion 141 analogue à la première unité de gestion 41 et générant le premier signal radiofréquence, une deuxième unité de gestion 142 analogue à la deuxième unité de gestion 42 et générant le deuxième signal radiofréquence, et une troisième unité de gestion 143 analogue à la troisième unité de gestion 43 et générant le troisième signal radiofréquence.

À la différence du dispositif électronique de gestion 24, le dispositif de gestion 124 comporte en outre une unité de génération 145 d'un signal complexe correspondant à la somme du premier signal radiofréquence, du deuxième signal radiofréquence et du troisième signal radiofréquence.

Également comme dans le cas précédent, les voies optiques 121, 122 délivrent respectivement un signal d'émission et un signal de référence, et diffèrent l'une de l'autre uniquement par la présence dans la voie optique 122 des moyens de différenciation du signal de référence du signal d'émission, analogues à ceux décrits précédemment.

Ainsi, par la suite, seule la voie optique 121 sera décrite en détail.

À la différence de la voie optique 21, la voie optique 121 comporte un seul modulateur 150, dit modulateur principal, analogue à l'un des modulateurs 31 à 33 décrits précédemment.

Le modulateur principal 150 est piloté par le signal complexe délivré par l'unité de génération 145. Ainsi, avec un tel signal complexe, le modulateur 150 est apte à moduler la raie principale passant par la voie optique 121 par chacun du premier signal radiofréquence, du deuxième signal radiofréquence et du troisième signal radiofréquence.

Un procédé de génération de peignes fréquentiels mis en oeuvre par le module de génération de peignes fréquentiels 112 selon le deuxième mode de réalisation et pour la voie optique 121, sera désormais décrit en référence à la figure 7 illustrant un organigramme de ses étapes.

Lors de l'étape A') analogue à l'étape A) décrite précédemment, la source laser 120 génère un signal laser comportant alors une raie principale.

Lors de l'étape B') suivante, l'unité de génération 145 génère un signal complexe correspondant à la somme desdits signaux radiofréquence. Ces signaux radiofréquence sont définis par les mêmes valeurs fréquentielles, les mêmes amplitudes de modulation et les mêmes déphasages relatifs que dans le cas précédent.

Lors de l'étape C') suivante, le modulateur 150, génère une pluralité principale de raies en modulant la raie principale par le signal complexe.

La pluralité de raies ainsi générée comporte comme dans le cas précédent treize raies espacées l'une de l'autre par la première valeur fréquentielle F.

Finalement, lors de l'étape D') suivante, un peigne est formé à partir des raies de la pluralité principale de raies.

Comme dans le cas précédent, selon une variante de réalisation, un modulateur additionnel analogue au modulateur additionnel décrit précédemment, est placé en aval du modulateur principal 150.

Dans ce cas, le procédé de génération selon le deuxième mode de réalisation de l'invention comporte en outre une étape E') lors de laquelle le modulateur additionnel triple le peigne généré lors de l'étape D').

Le dispositif de génération de peignes fréquentiel selon le deuxième mode de réalisation de l'invention est avantageux en ce qu'il permet de réduire le nombre des composants optiques utilisés. Ceci permet en particulier de diminuer les coûts relatifs à l'installation.

## Revendications

1. Procédé de génération de peignes fréquentiels composés d'un nombre prédéterminé de raies, le procédé comportant des étapes de :
A) génération d'une raie principale par une source laser (20) ;
B) génération d'une première pluralité de raies (51) en modulant la raie principale par un premier signal radiofréquence ;
C) génération d'une deuxième pluralité de raies (52) en modulant chaque raie de la première pluralité de raies (51) par un deuxième signal radiofréquence autre que le premier signal radiofréquence ;
D) génération d'une troisième pluralité de raies (53) en modulant chaque raie de la deuxième pluralité de raies (52) par un troisième signal radiofréquence autre que les premier et deuxième signaux radiofréquences ; et
E) formation d'un peigne à partir des raies de la troisième pluralité (53) de raies, chacun des premier, deuxième et troisième signaux radiofréquence étant à une valeur fréquentielle respective, et les valeur fréquentielles respectives des premier, deuxième et troisième signaux radiofréquence comprenant une première valeur fréquentielle, une deuxième valeur fréquentielle (2F) égale au double de la première valeur fréquentielle (F) et une troisième valeur fréquentielle (3F) égale au triple de la première valeur fréquentielle (F).

2. Procédé selon la revendication 1, dans lequel la modulation par le premier signal radiofréquence est effectuée avec une amplitude de modulation sensiblement égale à 1,6418 radians et un déphasage relatif sensiblement égal à 21,8°.

3. Procédé selon l'une quelconque des revendications précédentes, dans lequel la modulation par le deuxième signal radiofréquence est effectuée avec une amplitude de modulation sensiblement égale à 1,3549 radians et un déphasage relatif sensiblement égal à 43,6°.

4. Procédé selon l'une quelconque des revendications précédentes, dans lequel la modulation par le troisième signal radiofréquence est effectuée avec une amplitude de modulation sensiblement égale à 2,2829 radians et un déphasage relatif sensiblement égal à 245,4°.

5. Procédé de génération de peignes fréquentiels composés d'un nombre prédéterminé de raies, le procédé comportant des étapes de :
A') génération d'une raie principale par une source laser (120) ;
B') génération d'un signal complexe correspondant à la somme de trois signaux radiofréquence distincts ;
C') génération d'une pluralité principale de raies en modulant la raie principale par le signal complexe ;
D') formation d'un peigne à partir des raies de la pluralité principale de raies, chacun des signaux radiofréquence étant à une valeur fréquentielle respective, et les valeurs fréquentielles respectives des signaux radiofréquence comprenant une première valeur fréquentielle, une deuxième valeur fréquentielle (2F) égale au double de la première valeur fréquentielle (F) et une troisième valeur fréquentielle (3F) égale au triple de la première valeur fréquentielle (F).

6. Procédé selon la revendication 1 ou 2, dans lequel chacun des signaux radiofréquence est à une valeur fréquentielle respective, et les valeurs fréquentielles respectives des signaux radiofréquence comprennent une première valeur fréquentielle, une deuxième valeurfréquentielle (2F) égale au double de la première valeur fréquentielle (F) et une troisième valeur fréquentielle (3F) égale au triple de la première valeur fréquentielle (F).

7. Procédé selon l'une quelconque des revendications précédentes, comportant en outre une étape de modulation (F; E') des raies du peigne à une valeur fréquentielle additionnelle (FA) supérieure à la troisième valeur fréquentielle (3F).

8. Procédé selon la revendication 8, dans lequel la valeur fréquentielle additionnelle (FA) est comprise entre 20 et 40 GHz.

9. Module de génération de peignes fréquentiels (12; 112) composés d'un nombre prédéterminé de raies, comportant des moyens configurés pour mettre en oeuvre le procédé selon l'une quelconque des revendications précédentes.

10. Procédé de spectroscopie à distance de type LIDAR d'une matière ciblée, comprenant les étapes suivantes :
- génération (120) d'un signal d'émission comportant au moins un peigne généré selon le procédé selon l'une quelconque des revendications 1 à 8 ;
- émission (130) du signal d'émission vers la matière ciblée ;
- réception (140) d'un signal de réponse correspondant au signal d'émission réfléchi par la matière ciblée ; et
- analyse (150) du signal de réponse.

11. Procédé selon la revendication 10, dans lequel la première valeur fréquentielle (F) est choisie en fonction de caractéristiques physiques de la matière ciblée.

12. Dispositif de spectroscopie à distance (10) de type LIDAR comportant des moyens configurés pour mettre en oeuvre le procédé selon la revendication 10 ou 11.

## Patentansprüche

1. Verfahren zum Generieren von Frequenzkämmen, die aus einer Anzahl von vorbestimmten Strahlen bestehen, wobei das Verfahren die folgenden Schritte umfasst:
A) Generieren eines Hauptstrahls durch eine Laserquelle (20);
B) Generieren einer ersten Vielzahl von Strahlen (51) durch die Modulation des Hauptstrahls durch ein erstes Hochfrequenzsignal;
C) Generieren einer zweiten Vielzahl von Strahlen (52) durch die Modulation jedes Strahls der ersten Vielzahl von Strahlen (51) durch ein zweites Hochfrequenzsignal, das von dem ersten Hochfrequenzsignal verschieden ist;
D) Generieren einer dritten Vielzahl von Strahlen (53) durch die Modulation jedes Strahls der zweiten Vielzahl von Strahlen (52) durch ein drittes Hochfrequenzsignal, das von dem ersten und dem zweiten Hochfrequenzsignal verschieden ist; und
E) Bilden eines Kamms aus den Strahlen der dritten Vielzahl (53) von Strahlen, wobei jedes von dem ersten, dem zweiten und dem dritten Hochfrequenzsignal einen jeweiligen Frequenzwert aufweist, und die jeweiligen Frequenzwerte des ersten, des zweiten und des dritten Hochfrequenzsignals einen ersten Frequenzwert, einen zweiten Frequenzwert (2F), der gleich dem Doppelten des ersten Frequenzwerts (F) ist, und einen dritten Frequenzwert (3F), der gleich dem Dreifachen des ersten Frequenzwerts (F) ist, umfassen.

2. Verfahren nach Anspruch 1, wobei die Modulation durch das erste Hochfrequenzsignal mit einer Modulationsamplitude, die im Wesentlichen gleich 1,6418 Radiant ist, und einer relativen Phasenverschiebung, die im Wesentlichen gleich 21,8° ist, durchgeführt wird.

3. Verfahren nach einem der vorhergehenden Ansprüche, wobei die Modulation durch das zweite Hochfrequenzsignal mit einer Modulationsamplitude, die im Wesentlichen gleich 1,3549 Radiant ist, und einer relativen Phasenverschiebung, die im Wesentlichen gleich 43,6° ist, durchgeführt wird.

4. Verfahren nach einem der vorhergehenden Ansprüche, wobei die Modulation durch das dritte Hochfrequenzsignal mit einer Modulationsamplitude, die im Wesentlichen gleich 2,2829 Radiant ist, und einer relativen Phasenverschiebung, die im Wesentlichen gleich 245,4° ist, durchgeführt wird.

5. Verfahren zum Generieren von Frequenzkämmen, die aus einer Anzahl von vorbestimmten Strahlen bestehen, wobei das Verfahren die folgenden Schritte umfasst:
A') Generieren eines Hauptstrahls durch eine Laserquelle (120);
B') Generieren eines Komplexsignals, das der Summe aus drei unterschiedlichen Hochfrequenzsignalen entspricht;
C') Generieren einer Hauptvielzahl von Strahlen durch die Modulation des Hauptstrahls durch das Komplexsignal;
D') Bilden eines Kamms aus den Strahlen der Hauptvielzahl von Strahlen, wobei jedes der Hochfrequenzsignale einen jeweiligen Frequenzwert aufweist, und die jeweiligen Frequenzwerte der Hochfrequenzsignale einen ersten Frequenzwert, einen zweiten Frequenzwert (2F), der gleich dem Doppelten des ersten Frequenzwerts (F) ist, und einen dritten Frequenzwert (3F), der gleich dem Dreifachen des ersten Frequenzwerts (F) ist, umfassen.

6. Verfahren nach Anspruch 1 oder 2, wobei jedes der Hochfrequenzsignale einen jeweiligen Frequenzwert aufweist, und die jeweiligen Frequenzwerte der Hochfrequenzsignale einen ersten Frequenzwert, einen zweiten Frequenzwert (2F), der gleich dem Doppelten des ersten Frequenzwerts (F) ist, und einen dritten Frequenzwert (3F), der gleich dem Dreifachen des ersten Frequenzwerts (F) ist, umfassen.

7. Verfahren nach einem der vorhergehenden Ansprüche, das ferner einen Schritt des Modulierens (F; E') der Strahlen des Kamms mit einem zusätzlichen Frequenzwert (FA), der größer als der dritte Frequenzwert (3F) ist, umfasst.

8. Verfahren nach Anspruch 8, wobei der zusätzliche Frequenzwert (FA) zwischen 20 und 40 GHz beträgt.

9. Modul zum Generieren von Frequenzkämmen (12; 112), die aus einer Anzahl von vorbestimmten Strahlen bestehen, umfassend Mittel, die dazu konfiguriert sind, das Verfahren nach einem der vorhergehenden Ansprüche durchzuführen.

10. Verfahren für die LIDAR-Fernspektroskopie eines Zielmaterials, das die folgenden Schritte umfasst:
- Generieren (120) eines Sendesignals, das mindestens einen Kamm umfasst, der gemäß dem Verfahren nach einem der Ansprüche 1 bis 8 generiert wurde;
- Senden (130) des Sendesignals zu dem Zielmaterial hin;
- Empfangen (140) eines Antwortsignals, das dem vom Zielmaterial reflektierten Sendesignal entspricht; und
- Analysieren (150) des Antwortsignals.

11. Verfahren nach Anspruch 10, wobei der erste Frequenzwert (F) in Abhängigkeit von den physikalischen Eigenschaften des Zielmaterials ausgewählt wird.

12. LIDAR-Fernspektroskopievorrichtung (10), die Mittel umfasst, die dazu konfiguriert sind, das Verfahren nach Anspruch 10 oder 11 durchzuführen.

## Claims

1. A method of generating frequency combs consisting of a predetermined number of rays, the method comprising steps of:
A) Generation of a main ray by a laser source (20);
B) generation of a first plurality of rays (51) by modulating the main ray with a first radio frequency signal;
C) generation of a second plurality of rays (52) by modulating each ray of the first plurality of rays (51) with a second radio-frequency signal other than the first radio-frequency signal;
D) generation of a third plurality of rays (53) by modulating each ray of the second plurality of rays (52) with a third radio-frequency signal other than the first and second radio-frequency signals; and
E) formation of a comb from the rays of the third plurality (53) of rays, each of the first, second and third radio-frequency signals being at a respective frequency value, and the respective frequency values of the first, second and third RF signals comprising a first frequency value, a second frequency value (2F) equal to twice the first frequency value (F) and a third frequency value (3F) equal to three times the first frequency value (F).

2. A method according to claim 1, wherein modulation by the first radio-frequency signal is performed with a modulation amplitude substantially equal to 1.6418 radians and a relative phase shift substantially equal to 21.8°.

3. A method according to any of the preceding claims, wherein modulation by the second radio frequency signal is carried out with a modulation amplitude substantially equal to 1.3549 radians and a relative phase shift substantially equal to 43.6°.

4. Method according to any of the preceding claims, wherein modulation by the third radio frequency signal is carried out with a modulation amplitude substantially equal to 2.2829 radians and a relative phase shift substantially equal to 245.4°.

5. Method for generating frequency combs composed of a predetermined number of rays, the method comprising steps of:
A') generation of a main ray by a laser source (120);
B') generation of a complex signal corresponding to the sum of three distinct radio-frequency signals;
C') generation of a main plurality of rays by modulating the main ray with the complex signal;
D') forming a comb from the rays of the main plurality of rays, each of the radio frequency signals being at a respective frequency value, and the respective frequency values of the radio frequency signals comprising a first frequency value, a second frequency value (2F) equal to twice the first frequency value (F) and a third frequency value (3F) equal to three times the first frequency value (F).

6. A method according to claim 1 or 2, wherein each of the radio frequency signals is at a respective frequency value, and the respective frequency values of the radio frequency signals comprise a first frequency value, a second frequency value (2F) equal to twice the first frequency value (F) and a third frequency value (3F) equal to three times the first frequency value (F).

7. Method according to any of the preceding claims, further comprising a step of modulating (F; E') the comb rays at an additional frequency value (FA) higher than the third frequency value (3F).

8. Method according to claim 8, wherein the additional frequency value (FA) is between 20 and 40 GHz.

9. Module for generating frequency combs (12; 112) composed of a predetermined number of rays, comprising means configured to implement the process according to any of the preceding claims.

10. Method for LIDAR-type remote spectroscopy of a target material, comprising the following steps:
- generation (120) of a transmission signal comprising at least one comb generated according to the method of any one of claims 1 to 8;
- emission (130) of the emission signal to the target material;
- reception (140) of a response signal corresponding to the transmission signal reflected by the target material; and
- analysis (150) of the response signal.

11. Method according to claim 10, wherein the first frequency value (F) is selected based on the physical characteristics of the targeted material.

12. LIDAR remote spectroscopy device (10) configured to implement the method according to claim 10 or 11.
